Europäisches Patentamt

European Patent Office

Office européen des brevets

(19)

(11) Veröffentlichungsnummer: **0 017 766**
**B1**

# (12) EUROPÄISCHE PATENTSCHRIFT

(45) Veröffentlichungstag der Patentschrift:
16.05.84

(51) Int. Cl.³: **G 01 N 1/28**

(21) Anmeldenummer: **80101348.3**

(22) Anmeldetag: **14.03.80**

(54) Inkubationseinrichtung zur Behandlung von histologischen Präparaten.

(30) Priorität: **14.04.79 DE 2915248**

(43) Veröffentlichungstag der Anmeldung:
**29.10.80 Patentblatt 80/22**

(45) Bekanntmachung des Hinweises auf die Patenterteilung:
**16.05.84 Patentblatt 84/20**

(84) Benannte Vertragsstaaten:
**AT FR GB IT SE**

(56) Entgegenhaltungen:
**DE - A - 2 718 946**
**FR - A - 1 453 945**
**FR - A - 2 391 463**
**GB - A - 978 276**
**GB - A - 2 014 330**
**US - A - 3 526 203**
**US - A - 3 889 014**
**US - A - 3 892 197**
**US - A - 4 129 093**

(73) Patentinhaber: **Freiherr von Gise, Hardo, Dr. med.,**
**Schwärzlocher Strasse 110, D-7400 Tübingen (DE)**

(72) Erfinder: **Freiherr von Gise, Hardo, Dr. med.,**
**Schwärzlocher Strasse 110, D-7400 Tübingen (DE)**

(74) Vertreter: **Möbus, Rudolf, Dipl.-Ing.,**
**Hindenburgstrasse 65, D-7410 Reutlingen (DE)**

Inkubationseinrichtung zur Behandlung von histologischen Präparaten

Die Erfindung betrifft eine Inkubationseinrichtung zur Behandlung von histologischen Präparaten, insbesondere zur Verwendung in automatisch arbeitenden Behandlungseinrichtungen, mit mindestens einer Behandlungskammer zur Aufnahme mehrerer Präparate.

Inkubationseinrichtungen mit den vorstehend genannten Merkmalen sind u. a. durch die US-A 41 29 093 und die DE-A 27 18 946 bekannt. Die bisher bekannten Inkubationseinrichtungen haben aber den Nachteil, daß sie keine Gewähr für eine gleichmäßige Behandlung aller der mehreren Präparate, die gleichzeitig behandelt werden, geben, und sich auch nicht zur Anwendung aller üblichen Methoden der Inkubation und Einbettung biologischer Präparate eignen. Es besteht die Gefahr, daß beispielsweise unten in der Behandlungskammer angeordnete Präparate länger und intensiver einer Behandlungsflüssigkeit ausgesetzt sind als höher liegende Präparate. Diese Gefahr besteht insbesondere bei der Verwendung von Behandlungsmitteln, die Emulsionen sind und aus denen sich leicht Bestandteile nach unten absetzen können.

Der Erfindung liegt die Aufgabe zugrunde, eine Inkubationseinrichtung der genannten Art so auszubilden, daß eine gleichmäßige gleichzeitige Behandlung mehrerer histologischer Präparate gewährleistet ist.

Die gestellte Aufgabe wird erfindungsgemäß dadurch gelöst, daß bei einer Inkubationseinrichtung der eingangs genannten Art jede Behandlungskammer als Rohr ausgebildet ist, in das die Präparate in aneinandergereihten, gas- und flüssigkeitsdurchlässigen Kapseln mit Siebboden und Siebdeckel eingebracht und mittels eines Hohlkolbens in gegenseitiger Anlage gehalten sind und jede Kammer eine Zulaufleitung und eine Ablaufleitung aufweist, wobei als Ablaufleitung auch die mit dem Hohlkolben verbundene Hohlkolbenstange dienen kann.

Mit einer erfindungsgemäß ausgebildeten Inkubationseinrichtung kann praktisch der ganze Bereich der bekannten histologischen Inkubationstechniken erfaßt und einem exakten, vorprogrammierbaren automatischen Ablauf unterworfen werden, bei welchem die Behandlung der mehreren histologischen Präparate im Durchflußverfahren erfolgt. Dadurch ist sichergestellt, daß alle Präparate in gleichem Maße dem Einfluß der Reagenzien unterworfen werden, wobei unter Reagenzien alle möglichen, durch Rohr- oder Schlauchleitungen transportierbare Stoffe zu verstehen sind, einschließlich Stoffen, wie Kunststoff oder Paraffin, die zum Einbetten der Präparate für die Licht- oder Elektronenmikroskopie dienen. Aus dem Zustand der Reagenzien in der Ablaufleitung der Behandlungskammer können Rückschlüsse auf den erreichten Behandlungsgrad in den Behandlungskammern gezogen werden, ohne daß dabei der Fortgang der Behandlung der Präparate unterbrochen werden müßte.

Mit einer erfindungsgemäß ausgebildeten Inkubationseinrichtung lassen sich immunhistologische Methoden am Paraffinschnitt, Methoden der quantitativen Histochemie am histologischen Schnittpräparat und arbeitsintensive Spezialfärbungen, die nicht routinemäßig anfallen, mit großer Exaktheit durchführen.

Vorteilhafterweise kann das die Behandlungskammer bildende Rohr konzentrisch in einem von einer temperierten Flüssigkeit durchfließbaren Außenrohr angeordnet sein, und die Zulaufleitung und die Ablaufleitung jeder Behandlungskammer können jeweils mit einem steuerbaren Ventil der Behandlungseinrichtung verbunden sein. Dadurch ist es auch möglich, wahlweise in nur einer oder gleichzeitig in mehreren Aufnahmekammern der Inkubationseinheit zu arbeiten, wobei in mehreren Aufnahmekammern auch gleichzeitig mit unterschiedlichen Reagenzien gearbeitet werden kann. Auch läßt sich hierbei die Forderung erfüllen, verschiedene Reagenzien in unterschiedliche Abfallbehälter nacheinander abzuleiten. Zur Intensivierung der Behandlung kann in die Zulaufleitung der Behandlungskammern eine Pulsationsvorrichtung gelegt sein.

Nachfolgend wird ein Ausführungsbeispiel einer erfindungsgemäß ausgebildeten Inkubationseinrichtung und einer darin verwendeten Behandlungskammer anhand der weitgehend schematischen Zeichnungen näher erläutert. Im einzelnen zeigt

Fig. 1 ein Funktionsschema des Versorgungsteiles und der Inkubationseinheit der Inkubationseinrichtung;

Fig. 2 einen zentralen Längsschnitt durch eine Behandlungskammer der Inkubationseinheit der Inkubationseinrichtung;

Fig. 3 einen Schnitt durch einen der in der Behandlungskammer nach Fig. 2 verwendeten Präparatträger.

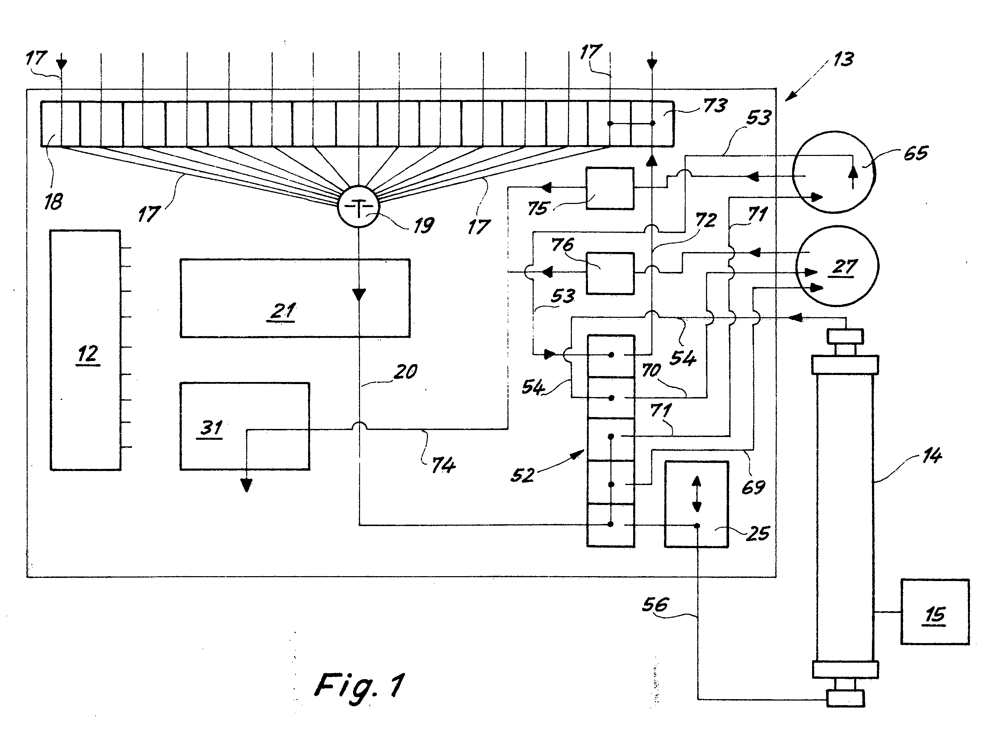

Fig. 1 zeigt das Funktionsschema des Versorgungsteiles 13 einer Inkubationseinrichtung und ihre eigentliche Inkubationseinheit 14, an welche ein Thermostatteil 15 angeschlossen ist. Der Versorgungsteil 13 zeigt Verbindungsleitungen 17, von denen jede zu einem nicht dargestellten Reagenzienspeicher führt. Jede Verbindungsleitung 17 ist mit einem steuerbaren Absperrventil 18 versehen. Beim dargestellten Ausführungsbeispiel sind fünfzehn Verbindungsleitungen 17 und dementsprechend fünfzehn steuerbare Absperrventile 18 vorgesehen. Hinter den Absperrventilen 18 führen alle Verbindungsleitungen 17 in eine gemeinsame Zentralkammer 19, wo an den Einmündungsstellen der Verbindungsleitungen 17 nicht dargestellte Rückschlagventile angeordnet sind und in welcher bereits eine Mischung mehrerer gleichzeitig zugeleiteter Reagenzien stattfinden kann. Von der Zentralkammer 19 führt eine gemeinsame Versorgungsleitung 20, in welche eine Förderpumpe 21 gelegt ist, zum Eingang eines Umschaltventiles 52, das mehrere Schaltstellungen einnehmen kann. Das Umschaltventil 52 weist weitere Eingänge für eine von einem Spülbehälter 65 kommende Spülzuflußleitung 53 und für die aus der Inkubationseinheit 14 kommende Ablaufleitung 54 auf. Ausgangsseitig sind an das Umschaltventil 52 die Zulaufleitung 56 zur Inkubationseinheit 14, zwei in einen Abfallbehälter 27 führende Auslaufleitungen 69 und 70, eine in einen Spülbehälter 65 führende Spülrücklaufleitung 71 und eine Spülverbindungsleitung 72 angeschlossen. In die Zulaufleitung 56 zur Inkubationseinheit 14 ist eine Pulsationsvorrichtung 25 zur Erzeugung von Flüssigkeitsbewegung in der mindestens einen Behandlungskammer der Inkubationseinheit 14 gelegt. Die Spülverbindungsleitung 72 ist über ein zusätzliches Eingangsventil 73 wahlweise mit dem zur Zentralkammer 19 führenden Abschnitt einer der Verbindungsleitungen 17 verbindbar.

Der Versorgungsteil 13 weist eine Vakuumpumpe 31 auf, die über eine Saugleitung 74 und zwei Absperrventile 75 und 76 wahlweise mit dem Spülbehälter 65 oder dem Abfallbehälter 27 verbindbar ist.

In das Funktionsdiagramm der Fig. 1 ist auch eine Interface-Stufe 12 eingezeichnet, über welche ein nicht dargestellter Computer mit dem Versorgungsteil 13 zur Steuerung seiner Einzelelemente koppelbar ist. Die von dieser Interface-Stufe 12 zu den einzelnen, elektrisch betätigbaren Ventilen und Pumpen des Versorgungsteiles 13 führenden Steuerleitungen sind der Übersichtlichkeit wegen nicht dargestellt.

Je nach der Stellung des mehrstufigen Umschaltventiles 52, das über die Interface-Stufe 12 computergesteuert ist, werden Reagenzien über die Sammelleitung 20 und die Zulaufleitung 56 in die Inkubationseinheit 14 gefördert und in den Abfallbehälter 27 abgeleitet oder wird mittels der Vakuumpumpe 31 Spülmittel aus dem Spülbehälter 65 über die Spülverbindungsleitung 72 in die Zentralkammer 19 und weiter durch alle benutzten Kanäle des Versorgungsteiles 13 und schließlich in den Abfallbehälter 27 gefördert. Beim Einschalten des Spülkreislaufes kann auch gleichzeitig die Förderpumpe 21 betätigt werden. Mit der Umschaltung des Umschaltventiles 52 erfolgt gleichzeitig eine Schaltung eines Teiles der anderen Ventile entsprechend den jeweils zu schaffenden Verbindungen im Versorgungsteil 13.

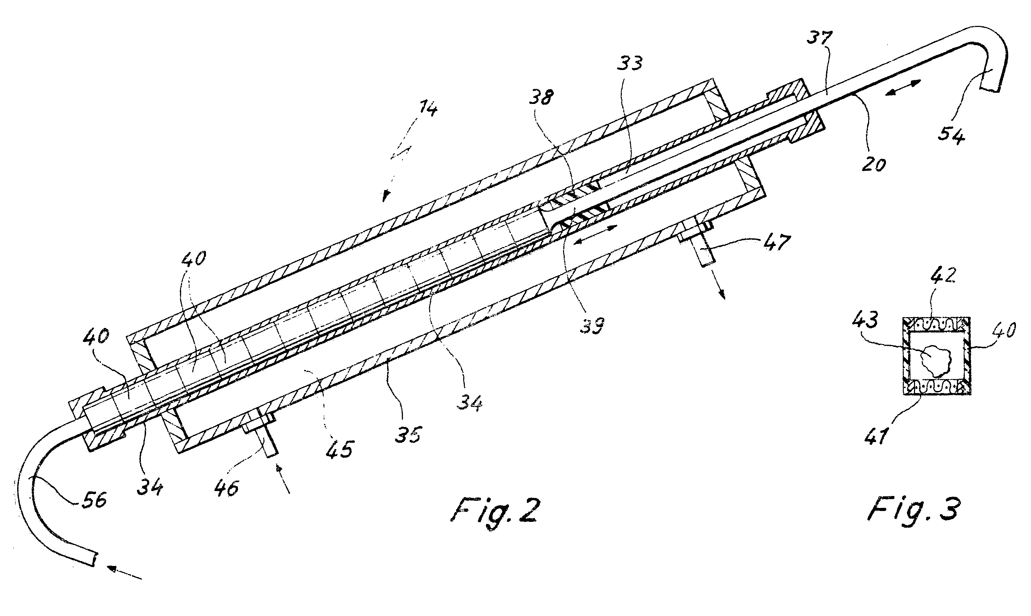

Fig. 2 zeigt einen schematischen Längsschnitt durch eine Behandlungskammer 33 der Inkubationseinheit 14. Diese Behandlungskammer 33 kann allein oder zusammen mit weiteren gleichartigen Behandlungskammern vorgesehen sein. Die Behandlungskammer 33 ist in einem Rohr 34 untergebracht, das konzentrisch in einem Außenrohr 35 angeordnet ist. An das eine Rohrende ist die Reagenzien-Zulaufleitung 56 angeschlossen. Durch das andere Rohrende ragt eine hohle Kolbenstange 37 eines in das Rohr 34 dichtend eingeführten Kolbens 38, der eine zentrale und mit der hohlen Kolbenstange 37 kommunizierende Durchgangsöffnung 39 aufweist. In der durch das Rohr 34 gebildeten Behandlungskammer 33 sind mehrere Präparatkapseln 40 hintereinander angeordnet, von denen eine in Fig. 3 einzeln im Schnitt dargestellt ist. Die zylindrischen Präparatkapseln 40 weisen einen Siebboden 41 und einen lösbaren Siebdeckel 42 auf, der durch ein Gewinde oder einen Bajonettverschluß auf der Präparatkapsel 40 gesichert sein kann. In die Präparatkapseln 40 sind zu behandelnde Gewebeteile 43 eingebracht. Die Präparatkapseln 40 sind in dem Rohr 34 so aufgereiht, daß sich an den Siebdeckel 42 der einen Kapsel 40 der Siebboden 41 der benachbarten Kapsel anschließt. Mittels des Kolbens 48 werden die Präparatkapseln 40 in dichter Anlage gegeneinander gehalten. Die über die Zulaufleitung 56 in das Rohr 34 eintretenden Reagenzien durchfließen alle Präparatkapseln 40 und gelangen dann durch die Durchgangsöffnung 39 des Kolbens 38 und die hohle Kolbenstange 37 hindurch in die am Ende der Kolbenstange 37 angeschlossene Ablaufleitung 54. Die Enden des Außenrohres 35 sind verschlossen. Durch den zwischen dem Innenrohr 34 und dem Außenrohr 35 befindlichen Ringraum 45 kann über eine Zulaufleitung 46 und eine Ableitung 47 ein Heiz- oder Kühlmedium hindurchgeleitet werden.

## Patentansprüche

1. Inkubationseinrichtung zur Behandlung von histologischen Präparaten, insbesondere zur Verwendung in automatisch arbeitenden Behandlungseinrichtungen, mit mindestens einer Behandlungskammer (33) zur Aufnahme mehrerer Präparate (43), dadurch gekennzeichnet, daß jede Behandlungskammer (33) als Rohr (34) ausgebildet ist, in das die Präparate (43) in aneinandergereihten gas- oder flüssigkeitsdurchlässigen Kapseln (40) mit Siebboden (41) und Siebdeckel (42) eingebracht und mittels eines Hohlkolbens (38) in gegenseitiger Anlage gehalten sind und jede Behandlungskammer (33) eine Zulaufleitung (56) und eine Ablaufleitung (54) aufweist, wobei als Ablaufleitung auch die mit dem Hohlkolben (38) verbundene Hohlkolbenstange (37) dienen kann.

2. Inkubationseinrichtung nach Anspruch 1, dadurch gekennzeichnet, daß das die Behandlungskammer (33) bildende Rohr (34) konzentrisch in einem von einer temperierten Flüssigkeit durchfließbaren Außenrohr (35) angeordnet ist.

3. Inkubationseinrichtung nach Anspruch 1 oder 2, dadurch gekennzeichnet, daß die Zulaufleitung (56) und die Ablaufleitung (54) der Behandlungskammer (33) mit einem Umschaltventil (52) verbunden sind.

4. Inkubationseinrichtung nach einem der Ansprüche 1 bis 3, dadurch gekennzeichnet, daß in die Zulaufleitung (56) eine Pulsationsvorrichtung (25) gelegt ist.

## Claims

1. Incubation device for the treatment of histological preparations, in particular for use in automatically operated treatment devices, with at least one treatment chamber (33) which is to receive several preparations (43), characterized in that each treatment chamber (33) is shaped as a tube (34), into which the preparations (43) are introduced in rows of gas- and liquid-Permeable capsules (40) with a sieve bottom (41) and a sieve cover (42) and are held in mutual contact by means of a hollow piston (38), and each treatment chamber (33) has a feed line (56) and a discharge line (54), it also being possible for the hollow piston rod (37) joined to the hollow piston (38) to serve as the discharge line.

2. Incubation device according to claim 1, characterized in that the tube (34) forming the treatment chamber (33) is arranged concentrically in an outer tube (35) through which a temperature-controlled fluid can flow.

3. Incubation device according to claim 1 or 2, characterized in that the feed line (56) and the discharge line (54) of the treatment chamber (33) are connected to a change-over valve (52).

4. Incubation device according to one of claims 1 to 3, characterized in that a pulsing device (25) is located in the feed line (56).

## Revendications

1. Dispositif incubateur pour le traitement de préparations histologiques, notamment pour utilisation dans des dispositifs de traitement à fonctionnement automatique, ayant au moins une chambre de traitement (33) pour recevoir plusieurs préparations (43), caractérisé en ce que chaque chambre de traitement (33) est sous la forme d'un tube (34) dans lequel des capsules (40) contenant les préparations (43), perméables aux gaz et liquides, rangées en file et ayant un fond poreux (41) et un couvercle poreux (42) sont logées et sont maintenues les unes contre les autres par un piston creux (38), et chaque chambre de traitement (33) comporte une conduite d'amenée (56) et une conduite d'écoulement (54), la tige (37) reliée au piston creux (38) pouvant également servir de conduite d'écoulement.

2. Dispositif incubateur selon la revendication 1, caractérisé en ce que le tube (34) formant la chambre de traitement (33) est disposé concentriquement dans un tube externe (35) traversable par un fluide tempéré.

3. Dispositif incubateur selon la revendication 1 ou 2, caractérisé en ce que la conduite d'amenée (56) et la conduite d'écoulement (54) de la chambre de traitement (33) sont raccordées à un distributeur (52).

4. Dispositif incubateur selon l'une des revendications 1 à 3, caractérisé en ce qu'un dispositif à pulsation (25) est disposé dans la conduite d'amenée (56).

*Fig. 1*

Fig.2

Fig.3

0 017 766